# EUROPÄISCHE PATENTSCHRIFT

(11) **EP 4 476 297 B1**
(45) Veröffentlichungstag und Bekanntmachung des Hinweises auf die Patenterteilung: **01.04.2026**
(21) Anmeldenummer: 23704917.6
(22) Anmeldetag: 10.02.2023
(51) Int. Cl.: C09J 7/38, C09J 133/06, C09J 133/14

(54) **HAFTKLEBEMASSE MIT VERBESSERTER CHEMISCHER BESTÄNDIGKEIT**
PRESSURE-SENSITIVE ADHESIVE COMPOSITION WITH IMPROVED CHEMICAL RESISTANCE
COMPOSITION ADHÉSIVE SENSIBLE À LA PRESSION PRESENTANT UNE RESISTANCE CHIMIQUE AMELIOREE

(30) Priorität: 11.02.2022 DE 102022103280
(43) Veröffentlichungstag der Anmeldung: 18.12.2024
(73) Patentinhaber: TESA SE, 22848 Norderstedt (DE)
(72) Erfinder: KRETZMER, Ralf, 22391 Hamburg (DE)
(74) Vertreter: tesa SE
(86) Internationale Anmeldenummer: PCT/EP2023/053289
(87) Internationale Veröffentlichungsnummer: WO 2023/152282

(56) Entgegenhaltungen:
- WO-A1-2012/128294
- WO-A1-2019/229150
- DE-A1- 102019 219 167
- US-A1- 2003 008 140
- US-A1- 2019 308 924

## Beschreibung

Die Erfindung betrifft eine Haftklebemasse und ein entsprechendes Haftklebeband sowie die Verwendung spezifischer Klebharze zur Steigerung der Klebkraft und chemischen Beständigkeit in Poly(meth)acrylat-basierten Klebemassen. Offenbart wird zudem die Verwendung eines entsprechenden Haftklebebandes zur Erzeugung einer witterungsbeständigen Verklebung.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar, deren Klebewirkung auf den eingesetzten Klebemassen beruht.

Für zahlreiche technischen Anwendungen sind insbesondere Haftklebebänder relevant, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Im Bereich der Haftklebemassen haben sich insbesondere Poly(meth)acrylate als sehr gut einsetzbare Basismaterialien erwiesen. Diese polymeren Verbindungen verfügen regelmäßig über physikalisch-chemische Eigenschaften, die sie für den Einsatz in Haftklebemassen prädestinieren, beispielsweise eine hohe Beständigkeit gegenüber Licht, Witterungseinflüssen und einer Vielzahl von Chemikalien sowie auch eine hohe intrinsische Klebkraft und eine vorteilhafte Alterungsbeständigkeit. Darüber hinaus sind Poly(meth)acrylat-basierte Klebemassen regelmäßig auf einer breiten Palette von Substraten einsetzbar, insbesondere sowohl auf polaren als auch auf weniger polaren Substraten, beispielsweise auf Glas und Stahl, aber auch auf Kunststoffen, wie beispielsweise Polystyrol oder Polycarbonaten. Im technischen Gebiet der Klebetechnik besteht entsprechend ein fortgesetztes Interesse daran, die physikalisch-chemischen Eigenschaften von Poly(meth)acrylat-basierten Haftklebemassen zu verbessern, insbesondere deren klebtechnische Eigenschaften.

Ein bekannter Ansatz zur Erhöhung der Klebwirkung und zur Verbesserung der Benetzung von Substraten ist es, Poly(meth)acrylat-basierten Haftklebemassen zusätzlich Klebharze (sogenannte "Tackifier"), wie beispielsweise Terpen-Phenol- oder Kolophoniumharze, zuzusetzen. Auch wenn der etablierte Einsatz von Klebharzen in Poly(meth)acrylat-basierten Haftklebemassen zum Erhalt von besonders leistungsfähigen Haftklebemassen in vielerlei Hinsicht vorteilhaft ist, ist er hinsichtlich bestimmter Aspekte auch mit Nachteilen verbunden, insbesondere hinsichtlich der chemischen Beständigkeit. Ausgehend von den zumeist guten intrinsischen chemischen Beständigkeiten typischer Poly(meth)acrylat-baiserter Haftklebemassen verschlechtert sich die chemische Beständigkeit durch den Einsatz von üblichen Klebharzen nämlich regelmäßig. Eine hohe chemische Beständigkeit ist jedoch für die meisten Anwendungen, bei denen entsprechende Haftklebemassen und daraus hergestellte Haftklebebänder anspruchsvolleren Umwelt- und Witterungsbedingungen ausgesetzt sind, überaus wünschenswert. Die chemische Beständigkeit ist nämlich ausschlaggebend dafür, dass die eingesetzten Haftklebemassen und Haftklebebänder die vorgesehenen Aufgaben bei der Verbindung von Elementen über lange Zeiträume erfüllen können, auch wenn sie beim Einsatz, beispielsweise in einem Fahrzeug, mit Chemikalien wie beispielsweise Wasser, Säuren oder Öl in Kontakt gelangen.

DE102019219167A1 offenbart eine Haftklebemasse umfassend: a) ein Poly(meth)acrylat mit einem gewichtsmittleren Molekulargewicht Mw von 19975000 g/mol in einem Massenanteil von 78 %, bezogen auf die Masse der Haftklebemasse, und b) ein Oligomer Acrylat mit einem gewichtsmittleren Molekulargewicht Mw von 5300 g/mol in einem Massenanteil von 22 %, bezogen auf die Masse der Haftklebemasse, wobei das Klebharz durch Polymerisation einer Monomerzusammensetzung umfassend, bezogen auf die Masse der ersten Monomerzusammensetzung, Methylmethacrylat in einem Massenanteil von 40 % und Cyclohexylmethacrylat in einem Massenanteil von 30 %, hergestellt ist.

Die Relevanz der chemischen Beständigkeit für den Einsatz von Haftklebebändern geht soweit, dass viele Anforderungsprofile für entsprechende Haftklebebänder, beispielsweise aus der Automobil- oder Elektronikindustrie, hinsichtlich der chemischen Beständigkeit spezifische Mindestvorgaben machen, die von entsprechenden Haftklebemassen erreicht werden müssen, um für den Einsatz zugelassen zu werden. Die Einhaltung dieser Vorgaben mit Poly(meth)acrylat-basierten Haftklebemassen wird durch den notwendigen Einsatz von typischen Klebharzen jedoch in vielen Fällen erschwert.

Somit besteht im Stand der Technik regelmäßig ein Zielkonflikt zwischen möglichst ausgeprägten Haftklebeeigenschaften, insbesondere einer hohen Klebkraft, auf der einen Seite und einer vorteilhaften chemischen Beständigkeit, d. h. einer geringen Verschlechterung der Klebkraft unter Einfluss von chemischen Substanzen, auf der anderen Seite.

Die primäre Aufgabe der vorliegenden Erfindung war es, die die vorstehend beschriebenen Nachteile des Standes der Technik zu beseitigen oder zumindest zu verringern.

Insbesondere war es die Aufgabe der vorliegenden Erfindung, eine Haftklebemasse anzugeben, welche über eine ausgezeichnete Haftklebrigkeit und gleichzeitig über eine ausreichende chemische Beständigkeit verfügt, insbesondere gegen Ethanol/Wasser-Gemische sowie Ölsäure.

Somit war es die Aufgabe der vorliegenden Erfindung, eine Haftklebemasse anzugeben, die den Zielkonflikt zwischen einer höchstmöglichen Klebekraft, insbesondere auf Stahl und Kunststoffen, auf der einen Seite sowie einer ausgezeichneten chemischen Beständigkeit auf der anderen Seite bestmöglich löst.

Hierbei war es eine ergänzende Aufgabe der vorliegenden Erfindung, dass die anzugebenden Haftklebemassen idealerweise möglichst weitgehend unter Verwendung solcher Ausgangsmaterialien und Verfahren herstellbar sein sollten, welche im Bereich der Klebetechnik bereits zum Einsatz kommen, um eine zeit- und kosteneffiziente Herstellung zu ermöglichen.

Es war eine ergänzende Aufgabe der vorliegenden Erfindung, ein vorteilhaftes Haftklebband anzugeben.

Zudem war es eine sekundäre Aufgabe der vorliegenden Erfindung, eine Verwendung spezifischer Klebharze zur Steigerung der Klebkraft und chemischen Beständigkeit in Poly(meth)acrylat-basierten Haftklebemassen anzugeben.

Die Erfinder haben nunmehr gefunden, dass sich die vorstehend beschriebenen Aufgaben überraschenderweise lösen lassen, wenn in Poly(meth)acrylatbasierten Haftklebemassen spezifische (Meth)acrylat-basierte Klebharze eingesetzt werden, wie es in den Ansprüchen definiert ist.

Überraschenderweise konnte durch die Verwendung eines spezifischen (Meth)acrylat-basierten Klebharzes, welches aus einer bestimmten Monomerzusammensetzung hergestellt wurde, die einen erheblichen Anteil an aromatischen (Meth)acrylaten und/oder Styrol umfasst, in Poly(meth)acrylatbasierten Haftklebemassen eine hervorragende Beständigkeit der Klebkraft gegen den Einfluss von verschiedenen chemischen Substanzen erreicht werden.

Hierbei ist es den Erfindern gelungen, besonders geeignete Zusammensetzungen für die (Meth)acrylat-basierten Klebharze, die eingesetzten Poly(meth)acrylate sowie die entsprechenden Haftklebemassen zu identifizieren, wobei die entsprechenden Haftklebemassen sowie die Einzelkomponenten vorteilhafterweise unter Verwendung von solchen Ausgangsmaterialien und Verfahren hergestellt werden können, die im Bereich der Klebtechnik üblich sind, sodass eine zeit- und kosteneffiziente Fertigung ohne Notwendigkeit für besondere Vorrichtungen oder spezielle Chemikalien möglich ist.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Haftklebebänder und Verwendungen ergeben sich aus den Merkmalen bevorzugter Klebemassen.

Insoweit nachfolgend für ein Element, beispielsweise für die Klebharze oder ein bestimmtes Monomer, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft eine Haftklebemasse, umfassend:
a) ein oder mehrere Poly(meth)acrylate mit einem gewichtsmittleren Molekulargewicht M_{w} von 200000 g/mol oder mehr in einem kombinierten Massenanteil von 50 % oder mehr, bezogen auf die Masse der Haftklebemasse, und
b) ein oder mehrere Klebharze mit einem gewichtsmittleren Molekulargewicht M_{w} von 20000 g/mol oder weniger in einem kombinierten Massenanteil im Bereich von 1 bis 25 %, bezogen auf die Masse der Haftklebemasse,
wobei das eine oder die mehreren Klebharze herstellbar sind durch Polymerisation einer ersten Monomerzusammensetzung umfassend bezogen auf die Masse der ersten Monomerzusammensetzung:
i) ein oder mehrere erste Monomere, die ausgewählt sind aus der Gruppe bestehend aus aromatischen (Meth)acrylaten und Styrol, in einem kombinierten Massenanteil im Bereich von 5 bis 40 %,
ii) ein oder mehrere zweite Monomere, die ausgewählt sind aus der Gruppe bestehend aus Methylmethacrylat und Ethylmethacrylat, in einem kombinierten Massenanteil im Bereich von 35 bis 68 %, und
iii) ein oder mehrere dritte Monomere, die ausgewählt sind aus der Gruppe bestehend aus (Meth)acrylaten mit einem cycloaliphatischen Rest, in einem kombinierten Massenanteil im Bereich von 5 bis 40 %.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G') und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G' und G" jeweils zumindest zum Teil im Bereich von 10³ bis 10⁷ Pa liegen.

Die erfindungsgemäße Haftklebemasse umfasst Poly(meth)acrylate und Klebeharze, die wiederum aus verschiedenen Monomeren herstellbar bzw. hergestellt sind. Diese Bestandteile werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die erste Monomerzusammensetzung als erstes Monomer ausschließlich Styrol umfassen, was bedeuten würde, dass die Monomerzusammensetzung eine Vielzahl von Styrol-Molekülen umfasst.

Im Rahmen der vorliegenden Erfindung umfasst der Ausdruck "Poly(meth)acrylate" in Übereinstimmung mit dem fachmännischen Verständnis Polyacrylate und Polymethacrylate sowie Copolymere dieser Polymere. Poly(meth)acrylate können kleinere Mengen an Monomereinheiten enthalten, die sich nicht aus (Meth)acrylaten ableiten. Unter einem "Poly(meth)acrylat" wird im Rahmen der vorliegenden Erfindung entsprechend ein (Co-)Polymer verstanden, dessen Monomerbasis zu einem Massenanteil von 70 % oder mehr, bevorzugt 90 % oder mehr, besonders bevorzugt 98 % oder mehr, aus Monomeren besteht, die ausgewählt sind aus der Gruppe bestehend aus Acrylsäure, Methacrylsäure, Acrylsäureestern und Methacrylsäureestern, bezogen auf die Masse der Monomerbasis. Bevorzugt liegt der Massenanteil von Acrylsäureester und/oder Methacrylsäureester bei 50 % oder mehr, besonders bevorzugt 70 % oder mehr.

Poly(meth)acrylate sind allgemein durch radikalische Polymerisation von Acryl- und/oder Methacryl-basierten Monomeren sowie gegebenenfalls weiteren copolymerisierbaren Monomeren zugänglich.

Die erfindungsgemäß einzusetzenden Klebharze sind herstellbar bzw. hergestellt durch Polymerisation einer ersten Monomerzusammensetzung, die zu großen Teilen ebenfalls aus (Meth)acrylaten besteht, so dass die Klebharze als (Meth)acrylat-basierte Klebeharze bezeichnet werden können.

In Übereinstimmung mit dem fachmännischen Verständnis und dem üblichen Vorgehen im Bereich der Technik ist es zielführend, polymere und oligomere Verbindungen wie die Klebharze und die Poly(meth)acrylate über das Herstellungsverfahren beziehungsweise die zur Herstellung verwendeten Ausgangsmaterialien zu definierten, da es unmöglich ist, die entsprechenden Materialien anders sinnvoll zu definieren.

Die Herstellung der Poly(meth)acrylate und auch der (Meth)acrylat-basierten Klebeharze aus den jeweiligen Monomeren kann nach den gängigen Verfahren erfolgen, insbesondere durch konventionelle radikalische Polymerisationen oder kontrollierte radikalische Polymerisationen. Die Polymere bzw. Oligomere können durch Copolymerisation der monomeren Komponenten unter Verwendung der üblichen Polymerisationsinitiatoren sowie gegebenenfalls von Reglern hergestellt werden, wobei bei den üblichen Temperaturen beispielsweise in Substanz, in Emulsion, z.B. in Wasser oder flüssigen Kohlenwasserstoffen, oder in Lösung polymerisiert werden kann. Bevorzugt werden die Poly(meth)acrylate und/oder die Klebharze durch Polymerisation in Lösungsmitteln, besonders bevorzugt in Lösungsmitteln mit einer Siedetemperatur im Bereich von 50 bis 150 °C, besonders bevorzugt im Bereich von 60 bis 120 °C, unter Verwendung der üblichen Mengen an Polymerisationsinitiatoren, hergestellt, wobei die Polymerisationsinitiatoren der Monomerzusammensetzung im Allgemeinen in einem Anteil von etwa 0,01 bis 5 %, insbesondere von 0,1 bis 2 % zugesetzt werden, bezogen auf die Masse der Monomerzusammensetzung.

Geeignete Polymerisationsinitiatoren sind beispielsweise Radikalquellen wie Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat oder Benzpinacol. Besonders bevorzugt wird als radikalischer Initiator 2,2'-Azobis(2-methylbutyronitril) oder 2,2'-Azobis(2-methylpropionitril) verwendet. Als Lösungsmittel kommen insbesondere Alkohole wie Methanol, Ethanol, n- und isoPropanol, n- und iso-Butanol, vorzugsweise Isopropanol und/oder Isobutanol, sowie Kohlenwasserstoffe wie Toluol und insbesondere Benzine mit einer Siedetemperatur im Bereich von 60 bis 120 °C in Frage. Insbesondere können Ketone, wie beispielsweise Aceton, Methylethylketon und Methylisobutylketon, und Ester, wie beispielsweise Essigsäureethylester, sowie Mischungen dieser Lösungsmittel eingesetzt werden.

Anders als bei den Klebeharzen ist es mit Blick auf die Klebeeigenschaften erfindungsgemäßer Haftklebebänder, insbesondere zum Einstellen einer hohen Kohäsion, für die Poly(meth)acrylate bevorzugt, wenn diese durch eine Vernetzung teilweise miteinander vernetzt werden, so dass die Haftklebemasse vernetzte Poly(meth)acrylate umfasst. Bevorzugt ist folglich eine erfindungsgemäße Haftklebemasse, wobei das eine oder die mehreren Poly(meth)acrylate herstellbar sind durch eine Polymerisation einer zweiten Monomerzusammensetzung, und anschließende Vernetzung der Polymere, wobei die Vernetzung bevorzugt mit einem chemischen Vernetzer und/oder einem physikalischen Vernetzer erfolgt. Bevorzugt werden die Poly(meth)acrylate der erfindungsgemäßen Haftklebemasse dabei unter Einsatz mindestens eines kovalenten Vernetzers oder unter Einsatz einer Kombination mindestens eines kovalenten Vernetzers mit mindestens einem koordinativen Vernetzer thermisch vernetzt.

Bevorzugte kovalente Vernetzer sind Epoxycyclohexylderivat und N,N-Diglycidylamine. Bevorzugte koordinative Vernetzer sind Chelatverbindungen, insbesondere mehrwertige Metallchelatverbindungen. Eine thermische Vernetzung bewirkt dabei regelmäßig eine besonders homogene Vernetzung, während beispielsweise bei strahlungsvernetzten Massen ein Vernetzungsprofil mit variierender Vernetzungsdichte beobachtet werden kann.

Bevorzugte thermische Vernetzer sind N,N,N',N'-Tetrakis(2,3-epoxypropyl)cyclohexane-1 ,3-dimethylamin und N,N,N',N'-Tetrakis(2,3-epoxypropyl)-m-xylen-a,a'-diamin sowie Epoxycyclohexylcarboxylate, insbesondere (3,4-Epoxycyclohexan)methyl-3,4- epoxycyclohexylcarboxylat und Bis(3,4-epoxycyclohexylmethyl)adipat.

Bevorzugte koordinative Vernetzer sind mehrwertige Metallchelatverbindungen, in denen ein mehrwertiges Metall koordinativ an eine oder mehrere organische Verbindungen gebunden ist. Als mehrwertiges Metallatom werden bevorzugt Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV) und Ti(IV) eingesetzt, insbesondere Al(III), Zr(IV) und Ti(IV). Als Liganden werden bevorzugt Alkylester, Alkoholverbindungen, Carbonsäureverbindungen, Etherverbindungen und Ketonverbindungen eingesetzt. Besonders bevorzugte koordinative Vernetzer sind Titandipropoxidbis(acetylacetonat), Titandibutoxidbis(octylenglycholat), Titandipropoxid-bis(ethylacetoacetat), Titandipropoxidbis(lactat), Titandipropoxidbis(triethanolaminat), Titandi-n-butoxidbis(triethanolaminat), Titantri-n- butoxidmonostearat, Butyltitanatdimer, Poly(titanacetylacetonat); Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylaceto- acetat, Aluminiumdisecbutoxidmonoethylacetoacetat, Aluminiumtriacetylacetonat,

Aluminiummonoacetylacetonatbis(ethylacetoacetonat) und Zirkoniumtetraacetylacetonat; insbesondere Aluminiumtriacetylacetonat und Aluminiumdiisopropoxidmonoethylacetat.

Der Fachmann versteht, dass in erfindungsgemäßen Haftklebemassen sowohl die Poly(meth)acrylate als auch die Klebharze zumindest teilweise aus (Meth)acrylaten hergestellt bzw. herstellbar sind. In der vorstehend angeführten Definition erfindungsgemäßer Haftklebemassen wird zum Zwecke einer klaren Unterscheidung zwischen den hochmolekularen Poly(meth)acrylaten und den kürzerkettigen Klebharzen das gewichtsmittlere Molekulargewicht definiert, um eine klare Unterscheidung dieser Komponenten zu ermöglichen. Dadurch drücken die vorstehenden Angaben die Unterschiede zwischen den beiden Komponenten durch eben jene Parameter aus, mit denen der Fachmann auch in der Praxis eine Unterscheidung zwischen Poly(meth)acrylaten und den Klebharzen vornimmt.

Die Bestimmung des gewichtsmittleren Molekulargewichts erfolgt dabei mittels Gelpermeationschromatographie (GPC) an 100 mL klarfiltrierter Probe (Probenkonzentration 0,5 g/L). Als Eluent wird Tetrahydrofuran mit 0,1 Vol.-% Trifluoressigsäure eingesetzt. Die Messung erfolgt bei 25 °C. Als Vorsäule wird eine Säule vom Typ PSS-SDV, 10 µm, ID 8,0 mm x 50 mm verwendet. Zur Auftrennung werden Säulen des Typs PSS-SDV, 5 µm, 10³ Ä (SN9090201) sowie 5 µm, 10² Ä (SN9090200) mit jeweils ID 8,0 mm x 300 mm eingesetzt (Detektion mittels Differentialrefraktometer PSS-SECurity 1260 RID). Die Durchflussmenge beträgt 0,5 mL pro Minute. Die Kalibrierung erfolgt gegen PMMA-Standards (Polymethylmethacrylat-Kalibrierung).

Den Erfindern ist es insoweit jedoch gelungen, für beide Komponenten der Haftklebemasse bevorzugte gewichtsmittlere Molekulargewichte zu identifizieren, deren Einstellung in besonders vorteilhaften erfindungsgemäßen Haftklebemassen resultiert. Hierbei hat sich insbesondere für die Klebharze herausgestellt, dass mit vergleichsweise kurzkettigen Klebharzen besonders gute chemische Beständigkeiten bei einer gleichzeitig guten Haftklebrigkeit erreicht werden können. Bevorzugt ist nämlich eine erfindungsgemäße Haftklebemasse, wobei das eine oder die mehreren Poly(meth)acrylate ein gewichtsmittleres Molekulargewicht M_{w} von 400000 g/mol oder mehr, bevorzugt von 500000 g/mol oder mehr, besonders bevorzugt von 600000 g/mol oder mehr, ganz besonders bevorzugt 750000 g/mol oder mehr, aufweist. Bevorzugt ist zusätzlich oder alternative eine erfindungsgemäße Haftklebemasse, wobei das eine oder die mehreren Klebharze ein gewichtsmittleres Molekulargewicht M_{w} im Bereich von 1000 bis 15000 g/mol, bevorzugt im Bereich von 1500 bis 10000 g/mol, besonders bevorzugt im Bereich von 2000 bis 5000 g/mol, aufweist.

Es kann als Vorteil der erfindungsgemäßen Haftklebemassen gesehen werden, dass in diesen neben den erfindungsgemäß vorzusehenden Bestandteilen auch weitere Bestandteile eingesetzt werden können, beispielsweise typische Additive. Insbesondere mit Blick auf eine optimale chemische Beständigkeit hat es sich jedoch als besonders vorteilhaft erwiesen, wenn die Haftklebemassen zu großen Teilen lediglich aus den vorstehend angegebenen Komponenten bestehen. Bevorzugt ist folglich eine erfindungsgemäße Haftklebemasse, wobei der kombinierte Massenanteil des einen oder der mehreren Poly(meth)acrylate und des einen oder der mehreren Klebharze 95 % oder mehr, bevorzugt 98 % oder mehr, besonders bevorzugt 99 % oder mehr, beträgt, bezogen auf die Masse der Haftklebemasse.

Hierbei hat es sich als besonderer Vorteil der erfindungsgemäßen Haftklebemassen erwiesen, dass der Anteil des Klebharzes vergleichsweise hoch gewählt werden kann, da die chemisch beständigen Klebharze der vorliegenden Erfindung auch bei relativ großen Massenanteilen die chemische Beständigkeit der Haftklebemasse nicht oder nur kaum nachteilig beeinflussen. Insoweit konnten die Erfinder optimale Massenbereiche für die Lösung des Zielkonflikts zwischen guten Klebeeigenschaften und einer hohen chemischen Beständigkeit, insbesondere auch gegen Substanzen wie Ölsäure, identifizieren. Bevorzugt ist nämlich eine erfindungsgemäße Haftklebemasse, wobei der kombinierte Massenanteil des einen oder der mehreren Klebharze im Bereich von 5 bis 25 %, bevorzugt im Bereich von 7,5 bis 22,5 %, besonders bevorzugt im Bereich von 10 bis 20 %, liegt, bezogen auf die Masse der Haftklebemasse. Bevorzugt ist zusätzlich oder alternativ eine erfindungsgemäße Haftklebemasse, wobei der kombinierte Massenanteil des einen oder der mehreren Poly(meth)acrylate 75 % oder mehr, bevorzugt 77,5 % oder mehr, besonders bevorzugt 80 % oder mehr, beträgt, bezogen auf die Masse der Haftklebemasse.

Es kann als großer Vorteil der erfindungsgemäßen Haftklebemassen gesehen werden, dass die einzusetzenden Poly(meth)acrylate hinsichtlich der chemischen Natur der Monomere sehr flexibel gewählt werden können, so dass die Haftklebemassen gezielt an die jeweiligen Anforderungen eines bestimmten Einsatzzweckes angepasst werden können, insbesondere da viele Poly(meth)acrylate intrinsisch über eine günstige chemische Beständigkeit verfügen. Ausgehend von eigenen Arbeiten, wie sie beispielsweise in der WO 2019/106194 und WO 2019/106195 offenbart sind, ist es den Erfindern jedoch gelungen, besonders günstige Zusammensetzungen für die Poly(meth)acrylate in den erfindungsgemäßen Haftklebemassen anzugeben, welche inhärent eine besonders hohe chemische Beständigkeit aufweisen, sodass sich in Kombination mit den vorteilhaften Klebharzen besonders leistungsfähige erfindungsgemäße Haftklebemassen erhalten lassen. Bevorzugt ist insbesondere eine erfindungsgemäße Haftklebemasse, wobei das eine oder die mehreren Poly(meth)acrylate herstellbar sind durch Polymerisation einer zweiten Monomerzusammensetzung umfassend bezogen auf die Masse der zweiten Monomerzusammensetzung:
iv) ein oder mehrere vierte Monomere die ausgewählt sind aus der Gruppe bestehend aus Acrylsäureestern gemäß der Formel (I),

   CH₂=CH-C(O)OR¹ (I),

   wobei R¹ für eine lineare oder verzweigte Alkylgruppe mit 1 bis 10 C-atomen steht, bevorzugt Methylacrylat, Ethylacrylat, n-Butylacrylat und Ethylhexylacrylat, in einem kombinierten Massenanteil im Bereich von 30 bis 80 %, bevorzugt im Bereich von 40 bis 70 %,
v) ein oder mehrere fünfte Monomere die ausgewählt sind aus der Gruppe bestehend aus Acrylsäureestern gemäß der Formel (II),

   CH₂=CH-C(O)OR² (II),

   wobei R² für einen Phenoxyalkylrest oder einen Alkoxyalkylrest mit 2 bis 5 C-Atomen steht, bevorzugt Phenoxyethylacrylat und Methoxyethylacrylat, in einem kombinierten Massenanteil im Bereich von 20 bis 70 %, bevorzugt im Bereich von 30 bis 50 %, und
vi) ein oder mehrere sechste Monomere die ausgewählt sind aus der Gruppe bestehend aus Acrylatmonomeren gemäß der Formel (III),

   CH₂=CH-C(O)OR³ (III),

   wobei R³ für ein H-Atom oder einen Hydroxyalkylrest mit 1 bis 4 C-Atomen steht, bevorzugt Acrylsäure, in einem kombinierten Massenanteil im Bereich von 0,5 bis 10 %, bevorzugt im Bereich von 1 bis 5 %,
   sowie bevorzugt zusätzlich:
      vii) ein oder mehrere siebte Monomere die ausgewählt sind aus der Gruppe bestehend aus Acrylsäureestern gemäß der Formel (IV),

         CH₂=CH-C(O)OR⁴ (IV),
wobei R⁴ für einen Alkyldiglykolrest steht, bevorzugt Ethyldiglycolacrylat, in einem kombinierten Massenanteil im Bereich von 0,5 bis 40 %, bevorzugt im Bereich von 5 bis 20 %.

Erfindungsgemäß werden die Klebharze durch Polymerisation einer ersten Monomerzusammensetzung erhalten, die verschiedene Monomere umfasst, nämlich erste Monomere, die ausgewählt sind aus der Gruppe bestehend aus aromatischen (Meth)acrylaten und Styrol, zweite Monomere, die ausgewählt sind aus der Gruppe bestehend aus Methylmethacrylat und Ethylmethacrylat, und dritte Monomere, die ausgewählt sind aus der Gruppe bestehend aus (Meth)acrylaten mit einem cycloaliphatischen Rest. In Übereinstimmung mit der üblichen Nomenklatur handelt es sich bei (Meth)acrylaten mit einem cycloaliphatischen Rest um Ester der (Meth)acrylsäure, welche in dem über die Ester-Funktionalität angebundenen Rest einen cycloaliphatischen Ring aufweisen, d. h. einen Ring, bei dem es sich nicht um einen Aromaten handelt. Entsprechend sind die dritten Monomere selbst cycloaliphatische Verbindungen, die zuweilen auch als alicyclische Verbindungen bezeichnet werden.

Nach Erkenntnis der Erfinder definieren die vorstehenden angegebenen Massenanteile für die ersten, zweiten und dritten Monomere in der ersten Monomerzusammensetzung mit ihren unteren Grenzen jeweils das Minimum der entsprechenden Monomere, mit dem Klebharze erhalten werden können, die beim Einsatz in Poly(meth)acrylat-basierten Haftklebemassen zu einer ausgezeichneten chemischen Beständigkeit führen, da sie die inhärente chemische Beständigkeit der Poly(meth)acrylat-basierten Haftklebemassen nicht oder nur kaum nachteilig beeinflussen.

Es kann als Vorteil der erfindungsgemäßen Haftklebemassen gesehen werden, dass die Klebharze zumindest teilweise auch aus weiteren Monomeren hergestellt werden können, wobei der Anteil an weiteren Monomeren nach Einschätzung der Erfinder zur Maximierung der chemischen Beständigkeit jedoch eher gering gehalten werden sollte. Der Einsatz von weiteren Monomeren, insbesondere von Thiolen, erlaubt jedoch eine gezielte Einstellung der physikalisch-chemischen Eigenschaften der Klebharze, wodurch es erleichtert wird, auch sonstige Anforderungsprofile abseits der chemischen Beständigkeit optimal zu erfüllen. Bevorzugt ist folglich eine erfindungsgemäße Haftklebemasse, wobei die erste Monomerzusammensetzung bezogen auf die Masse der ersten Monomerzusammensetzung ein oder mehrere weitere Monomere in einem kombinierten Massenanteil im Bereich von 0 bis 50 %, bevorzugt im Bereich von 0,1 bis 30 %, besonders bevorzugt im Bereich von 0,5 bis 15 % umfasst, wobei die weiteren Monomere bevorzugt ausgewählt sind aus der Gruppe bestehend aus sonstigen (Meth)acrylaten und Thiolen, bevorzugt Thiolen, besonders bevorzugt Dodecanthiol und 2-Ethylhexyl-3-mercaptopropionat. Bevorzugt ist alternativ eine erfindungsgemäße Haftklebemasse, wobei der kombinierte Massenanteil der ersten Monomere, zweiten Monomere und dritten Monomere in der ersten Monomerzusammensetzung, bezogen auf die Masse der ersten Monomerzusammensetzung, 80 % oder mehr, bevorzugt 90 % oder mehr, ganz besonders bevorzugt 98 % oder mehr, beträgt.

Ausgehend von den eigenen Experimenten sind die Erfinder zu der überraschenden Erkenntnis gelangt, dass sich die beobachteten vorteilhaften Eigenschaften mit Blick auf die Zusammensetzung des Klebharzes nur in einem vergleichsweise engen Zusammensetzungskorridor der drei Monomerklassen zeigen, wie es vorstehend definiert ist. Ausgehend von diesem Zusammensetzungskorridor ist es den Erfindern darüber hinaus gelungen, besonders vorteilhafte Zusammensetzungen zu identifizieren, mit denen besonders leistungsfähige Klebharze erhalten werden können. Bevorzugt ist nämlich eine erfindungsgemäße Haftklebemasse, wobei die erste Monomerzusammensetzung bezogen auf die Masse der ersten Monomerzusammensetzung:
i1) das eine oder die mehreren ersten Monomere, in einem kombinierten Massenanteil im Bereich von 7,5 bis 35 %, bevorzugt im Bereich von 10 bis 30 %, umfasst, und/oder
ii1) das eine oder die mehreren zweiten Monomere, in einem kombinierten Massenanteil im Bereich von 40 bis 65 %, bevorzugt im Bereich von 45 bis 60 %, umfasst, und/oder
iii1) das eine oder die mehreren dritten Monomere, in einem kombinierten Massenanteil im Bereich von 7,5 bis 35 %, bevorzugt im Bereich von 10 bis 30 %, umfasst. Besonders bevorzugt ist es insoweit, dass die entsprechenden Bereiche bzw. bevorzugten Bereiche für zwei oder mehr, bevorzugt sämtliche, der Monomere entsprechend eingestellt werden.

Darüber hinaus ist es den Erfindern gelungen, für die ersten, zweiten und dritten Monomere besonders geeignete Verbindungen zu identifizieren, die in besonders leistungsstarken Klebharzen resultieren, die in erfindungsgemäßen Haftklebemassen eingesetzt werden können, welche über eine besonders hohe chemische Beständigkeit verfügen. Bevorzugt ist insoweit eine erfindungsgemäße Haftklebemasse, wobei in der ersten Monomerzusammensetzung:
i2) das eine oder die mehreren ersten Monomere ausgewählt sind aus der Gruppe bestehend aus aromatischen (Meth)acrylaten, bevorzugt aromatischen Methacrylaten, besonders bevorzugt Benzylmethacrylat und Phenoxyethylmethacrylat, ganz besonders bevorzugt Benzylmethacrylat, und/oder
ii2) das eine oder die mehreren zweiten Monomere ausgewählt sind aus der Gruppe bestehend aus Methylmethacrylat und Ethylmethacrylat, bevorzugt Methylmethacrylat, und/oder
iii2) das eine oder die mehreren dritten Monomere ausgewählt sind aus der Gruppe bestehend aus Methacrylaten mit einem cycloaliphatischen Rest, bevorzugt Cyclohexylmethacrylat, Isobornylmethacrylat, Dicyclopentanylmethacrylat und Nornbornylmethacrylat, bevorzugt Cyclohexylmethacrylat. Auch hierbei ist es besonders bevorzugt, wenn die entsprechenden Verbindungen bzw. bevorzugten oder besonders bevorzugten Verbindungen für zwei oder mehr, bevorzugt, sämtliche, der vorstehenden Monomere entsprechend ausgewählt werden, wobei diese bevorzugten Monomere ganz besonders bevorzugt jeweils in den bevorzugten Massenanteilen eingesetzt werden.

Wie sich gezeigt hat, lässt sich durch den Zusatz von einem oder mehreren Weichmachern die Schockresistenz erfindungsgemäßer Haftklebemassen verbessern, ohne dass die Chemikalienbeständigkeit dadurch wesentlich beeinträchtigt wird. Bevorzugt umfasst die erfindungsgemäße Haftklebemasse entsprechend mindestens einen Weichmacher, wobei der Weichmacher besonders bevorzugt ausgewählt ist aus der Gruppe bestehend aus (Meth)acrylat-Oligomeren, Phthalaten, Kohlenwasserstoff-Ölen, Cyclohexandicarbonsäureestern, Benzoesäureestern, wasserlöslichen Weichmachern, Weichharzen, Phosphaten und Polyphosphaten, besonders bevorzugt Phthalaten, Cyclohexandicarbonsäureestern und Benzoesäureestern, ganz besonders bevorzugt Benzoesäureestern. Bevorzugt umfasst die erfindungsgemäße Haftklebemasse Weichmacher dabei in einem Massenanteil von 30 % oder weniger, bevorzugt 20 % oder weniger, besonders bevorzugt 15 % oder weniger. Zur weiteren Optimierung der physikalisch-chemischen Eigenschaften der erfindungsgemäßen Haftklebemasse kann diese zudem weitere geläufige Additive wie Füllstoffe, beispielsweise elektrisch leitfähige Füllmaterialien, thermisch leitfähige Füllmaterialien oder Flammschutzmittel, beispielweise Ammoniumpolyphosphat und dessen Derivate, enthalten.

In einer bevorzugten Ausführungsform ist die erfindungsgemäße Haftklebemasse geschäumt. Unter einer "geschäumten Haftklebemasse" wird eine Haftklebemasse verstanden, die ein haftklebriges Matrixmaterial und mehrere gasgefüllte Hohlräume umfasst, so dass die Dichte dieser Haftklebemasse im Vergleich zum bloßen Matrixmaterial ohne Hohlräume verringert ist. Die Schäumung des Matrixmaterials der geschäumten Haftklebemasse kann grundsätzlich auf jede beliebige Art und Weise bewirkt werden. Beispielsweise kann die Haftklebemasse mittels eines eingebrachten oder in ihr freigesetzten Treibgases geschäumt werden. Bevorzugt enthält die geschäumte Haftklebemasse zumindest teilweise expandierte Mikrohohlkugeln. Darunter werden zumindest teilweise expandierte Mikrokugeln verstanden, die in ihrem Grundzustand elastisch und expandierbar sind und eine thermoplastische Polymerhülle aufweisen. Diese Kugeln sind - im Grundzustand - mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind. Für derartige Mikrokugeln ist auch der Begriff "Mikroballons" gebräuchlich. Durch Wärmeeinwirkung erweicht die äußere Polymerhülle dieser Mikroballons. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum, wobei insoweit auch von einer syntaktischen Schäumung gesprochen wird.

Erfindungsgemäße Haftklebemassen können beispielsweise direkt als Klebemassen eingesetzt werden, wobei sie je nach Applikationsmethode beispielsweise auch in Form von Bändern bereitgestellt werden können. Mit Blick auf möglichst günstige Handhabungseigenschaften werden besonders vorteilhafte Resultate jedoch regelmäßig dann erzielt, wenn erfindungsgemäße Haftklebemassen als Klebeschicht eines ein- oder doppelseitigen Haftklebebandes eingesetzt werden, welches zudem eine Trägerschicht umfasst. Die Erfindung betrifft somit auch ein Haftklebeband, umfassend eine Trägerschicht und als Haftklebemasse eine erfindungsgemäße Haftklebemasse.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Materialien für die Trägerschicht sind beispielsweise Gewebe, Gelege und Kunststofffolien, zum Beispiel PET-Folien und Polyolefin-Folien. Die Trägerschicht kann jedoch auch selbst haftklebrig sein. Das erfindungsgemäße Haftklebeband kann in einer bevorzugten Ausführungsform ein doppelseitiges Haftklebeband sein, dessen Trägerschicht auf beiden Seiten mit einer erfindungsgemäßen Haftklebemasse versehen ist. In erfindungsgemäßen Haftklebebändern können die Klebeschichten mit einem sogenannten Releaseliner abgedeckt sein, um ein problemloses Abwickeln zu ermöglichen und die Haftklebemasse vor Verschmutzung zu schützen. Solche Releaseliner bestehen üblicherweise aus einer ein- oder beidseitig silikonisierten Kunststofffolie (z.B. PET oder PP) oder einem silikonisierten Papierträger.

Offenbart wird ausgehend von dem erfindungsgemäßen Haftklebeband zudem die Verwendung eines erfindungsgemäßen Haftklebebandes zur Verklebung von zwei oder mehr Komponenten zur Erzeugung einer chemisch beständigen Verklebung.

Im Lichte der vorstehenden Ausführungen versteht der Fachmann, dass auch die spezifisch zusammengesetzten Klebharze selbst sowie deren Verwendung zur gleichzeitigen Verbesserung der haftklebrigen Eigenschaften und Bewahrung der chemischen Beständigkeit in Poly(meth)acrylat-basierten Haftklebemassen inhärent vorteilhaft sind. Die Erfindung betrifft entsprechend auch die Verwendung eines oder mehrerer Klebharze zur Steigerung der Klebkraft in (Meth)acrylat-basierten Klebemassen und zur Steigerung der chemischen Beständigkeit, wobei das eine oder die mehreren Klebharze herstellbar sind durch Polymerisation einer ersten Monomerzusammensetzung umfassend bezogen auf die Masse der ersten Monomerzusammensetzung:
i) ein oder mehrere erste Monomere, die ausgewählt sind aus der Gruppe bestehend aus aromatischen (Meth)acrylaten und Styrol, in einem kombinierten Massenanteil im Bereich von 5 bis 40 %,
ii) ein oder mehrere zweite Monomere, die ausgewählt sind aus der Gruppe bestehend aus Methylmethacrylat und Ethylmethacrylat, in einem kombinierten Massenanteil im Bereich von 35 bis 68 %, und
iii) ein oder mehrere dritte Monomere, die ausgewählt sind aus der Gruppe bestehend aus (Meth)acrylaten mit einem cycloaliphatischen Rest, in einem kombinierten Massenanteil im Bereich von 5 bis 40 %.

Nachfolgend werden bevorzugte Ausführungsformen der Erfindung unter Bezugnahme auf Experimente weiter erläutert und beschrieben.

### 1. Herstellung der Poly(meth)acrylate:

**Tabelle 1 - Zusammensetzung der Poly(meth)acrylate, Angaben in Massenanteilen in %**

| **Substanz** | **P1** | **P2** | **P3** | **P4** | **P5** |
|---|---|---|---|---|---|
| Acrylsäure | 3 | 3 | 3 | 3 | 3 |
| n-Butylacrylat | 47 | 47 | 47 | 47 | 57 |
| Phenoxyethylacrylat | 30 | 50 | 30 | 30 | 20 |
| Methylacrylat | 20 | 0 | 0 | 0 | 0 |
| Ethylacrylat | 0 | 0 | 0 | 10 | 20 |
| Ethyhexylacrylat | 0 | 0 | 0 | 10 | 0 |
| Methoxyethylacrylat | 0 | 0 | 20 | 0 | 0 |

Ein für radikalische Polymerisationen konventioneller Reaktor wurde zur Herstellung der in Tabelle 1 aufgeführten Poly(meth)acrylate P1 bis P5 jeweils mit 100 kg der angegebenen Monomere in den angegebenen Massenanteilen und 72,4 kg eines Ethylacetat/Isopropanol-Gemischs (95:5) befüllt.

Nach 45-minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 70 °C erwärmt und die Reaktion konstant bei dieser Außentemperatur durchgeführt. Nach 1 h wurden erneut 50 g 2,2'-Azobis(2-methylbutyronitril) zugegeben. Jeweils nach 2, 3 und 4 h wurde mit 15 kg Ethylacetat/Isopropanol-Gemisch (95:5) verdünnt.

Nach 5,5 h sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Es wurde jeweils nahezu quantitative Umsätze erreicht.

### 2. Herstellung der Klebharze:

**Tabelle 2 - Zusammensetzung der Klebharze, Angaben in Massenanteilen in %**

| **Substanz** | **H1** | **H2** | **H3** | **H4** | **H5** | **H6** | **H7** |
|---|---|---|---|---|---|---|---|
| Methylmethacrylat | 45 | 65 | 70 | 65 | 60 | 60 | 45 |
| Cyclohexylmethacrylat | 45 | 15 | 10 | 15 | 20 | 15 | 15 |
| Styrol | 0 | 10 | 10 | 0 | 0 | 0 | 0 |
| Benzylmethacrylat | 0 | 0 | 0 | 10 | 10 | 15 | 30 |
| Dodecanthiol | 10 | 10 | 10 | 10 | 10 | 10 | 10 |

Ein für radikalische Polymerisationen konventioneller Reaktor wurde zur Herstellung der in Tabelle 2 aufgeführten Klebharze H1 bis H7 jeweils mit 100 kg der angegebenen Monomere in den angegebenen Massenanteilen und 72,4 kg eines Aceton/Isopropanol-Gemischs (96:4) befüllt.

Nach 45-minütiger Durchleitung von Stickstoffgas unter Rühren wurde der Reaktor auf 58°C hochgeheizt und 444 g 2,2'-Azobis(2-methylbutyronitril) (5 Gew.-% in Aceton) hinzugegeben. Anschließend wurde das äußere Heizbad auf 75°C erwärmt und die Reaktion konstant bei dieser Außentemperatur durchgeführt. Nach 7 h Reaktionszeit wurden wiederum 444 g 2,2'-Azobis(2-methylbutyronitril) (5 Gew.-% in Aceton) hinzugegeben. Die Reaktion wurde nach 22 h Reaktionszeit abgebrochen und auf Raumtemperatur abgekühlt. Es wurde jeweils nahezu quantitative Umsätze erreicht.

### 3. Herstellung der Haftklebemassen

**Tabelle 3 - Zusammensetzung der Haftklebemassen**

| **HKM** | **Typ Polymer** | **Typ Klebharz** | **Massenanteil Klebharz / %** |
|---|---|---|---|
| V1 | P1 | - | - |
| V2 | P1 | H1 | 10 |
| E1 | P1 | H4 | 10 |
| E2 | P1 | H7 | 10 |
| V3 | P2 | - | - |
| V4 | P2 | H1 | 10 |
| V5 | P2 | H1 | 20 |
| E3 | P2 | H2 | 5 |
| E4 | P2 | H2 | 10 |
| E5 | P2 | H2 | 20 |
| V6 | P2 | H2 | 30 |
| V7 | P2 | H3 | 10 |
| V8 | P2 | H3 | 20 |
| V9 | P3 | - | - |
| E6 | P3 | H4 | 20 |
| E7 | P3 | H5 | 20 |
| E8 | P3 | H6 | 20 |
| V10 | P4 | - | - |
| E9 | P4 | H4 | 20 |
| E10 | P4 | H7 | 20 |
| V11 | P5 | - | - |
| E11 | P5 | H7 | 20 |
| E12 | P5 | H7 | 25 |

Die erfindungsgemäßen Haftklebemassen E1 bis E12 und die nichterfindungsgemäßen Haftklebemassen V1 bis V11 wurden gemäß Tabelle 3 jeweils durch Mischen der entsprechenden Poly(meth)acrylate P1 bis P5 mit den Klebharze H1 bis H7 in den angegebenen Massenanteilen hergestellt.

Jede Haftklebemasse wurde zusätzlich mit 0,05 Gew.-%, bezogen auf das Poly(meth)acrylat, des Vernetzers N,N,N',N'-Tetrakis(2,3-epoxypropyl)-m-xylena,a'-diamin abgemischt, um das Poly(meth)acrylat zu vernetzen, wobei die Klebharze in Ermangelung geeigneter Funktionalitäten nicht mit vernetzt werden. Anschließend wurde die Mischung mit Ethylacetat auf einen Feststoffgehalt von 30 Gew.- % verdünnt und dann aus Lösung auf eine silikonisierte Trennfolie (50 µm Polyester PET) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug 50 g/m².

### 4. Klebkraft- und Chemikalienbeständigkeits-Test

Nach dem Abziehen der silikonisierten PET-Folie wurden die wie vorstehend unter Punkt 2 erhaltenen Klebebänder in einer Breite von jeweils 10 mm auf eine vorher gereinigte ASTM-Stahlplatte aufgebracht und fünfmal je Richtung hin und her mit einer 4 kg-Rolle überwälzt. Anschließend wurden die so erhaltenen Verklebungen für 24 h bei Normklima (Luft, 23 °C, 50 % relative Feuchte) aufbewahrt.

Die Probemuster wurden anschließend für 72 h in einer abgedichteten Box in einem auf 60 °C temperierten Wasserbad gelagert, wobei jeweils eine Probe in eine der Testchemikalie getaucht und dann vollständig von dieser umgeben gelagert wurde wohingegen die jeweilige Kontrollprobe in Luft gelagert wurde.

Als Testchemikalien wurden zum einen Ölsäure mit einer Reinheit von > 85 % und zum anderen ein Ethanol/Wasser-Gemisch (85/15, Massenanteile) eingesetzt. Nachdem die Boxen aus dem Wasserbad und die Probemuster aus den Boxen entnommen wurden, wurden die Probemuster mit einem Tuch vorsichtig gereinigt und nach 2 h Konditionierung im Normklima die Klebkraft bestimmt.

Die Bestimmung der Klebkraft erfolgte bei einem Prüfklima von 23 °C +/- 1 °C Temperatur und 50 % +/- 5 % relativer Luftfeuchte. Das Klebeband wurde mit einer Geschwindigkeit von 300 mm/min und in einem Winkel von 180° vom Stahlsubstrat abgezogen. Die Messergebnisse in Tabelle 4 sind in N/cm angegeben und entsprechen dem Mittelwert aus drei Messungen.

Die Klebebänder werden als gegen die jeweiligen Testchemikalien beständig angesehen, sofern sie nach der Lagerung in der jeweiligen Testchemikalie noch eine Klebkraft von mindestens 1,0 N/cm, zeigen. Dabei ist es vorteilhaft, wenn der Unterschied in der Klebkraft zwischen der Referenzprobe und den in den Testchemikalien gelagerten Proben möglichst gering ist. Zusammenfassend wird eine Probe insgesamt nur dann als chemisch ausreichend beständig angesehen, wenn sich nach der Lagerung gegenüber beiden Testchemikalien noch eine Klebkraft von mindestens 1,0 N/cm zeigt.

**Tabelle 4 - Klebkraft der Haftklebemassen Angaben in N/cm**

| **HKM** | **Kontrolle Klebkraft** | **Ölsäure Klebkraft** | **Ethanol/Wasser Klebkraft** | **Gesamt** |
|---|---|---|---|---|
| V1 | 6,4 | 4,0 | 4,2 | Beständig |
| V2 | 7,7 | 0,3 | 4,7 | Nicht beständig |
| E1 | 7,4 | 4,3 | 2,0 | Beständig |
| E2 | 8,3 | 4,2 | 2,3 | Beständig |
| V3 | 6,4 | 3,8 | 5,7 | Nicht beständig |
| V4 | 7,9 | 0,0 | 3,2 | Nicht beständig |
| V5 | 10,2 | 0,0 | 1,5 | Nicht beständig |
| E3 | 6,4 | 3,7 | 5,8 | Beständig |
| E4 | 8,2 | 2,6 | 2,3 | Beständig |
| E5 | 12,1 | 2,7 | 2,6 | Beständig |
| V6 | 13,2 | 0,0 | 2,6 | Nicht beständig |
| V7 | 5,9 | 0,0 | 4,7 | Nicht beständig |
| V8 | 9,4 | 0,7 | 5,3 | Nicht beständig |
| V9 | 7,1 | 4,5 | 2,4 | Beständig |
| E6 | 11,4 | 2,3 | 2,0 | Beständig |
| E7 | 12,3 | 2,0 | 1,7 | Beständig |
| E8 | 11,8 | 2,1 | 1,7 | Beständig |
| V10 | 6,4 | 2,2 | 3,5 | Beständig |
| E9 | 7,9 | 2,2 | 3,2 | Beständig |
| E10 | 7,5 | 2,3 | 3,1 | Beständig |
| V11 | 6,0 | 3,2 | 2,5 | Beständig |
| E11 | 7,2 | 2,8 | 2,3 | Beständig |
| E12 | 7,2 | 2,7 | 2,0 | Beständig |

Die in Tabelle 4 zusammengestellten Messwerte zeigen deutlich, dass sämtliche der eingesetzten Poly(meth)acrylate ohne den Zusatz von Klebharzen in gewissem Umfang chemisch beständig sind, so dass diese geeignete Referenzsysteme zur Bewertung des Einflusses der Klebharze darstellen.

Sämtliche Klebharze in erfindungsgemäßen Haftklebemassen führen in den Kontrollproben zuverlässig zu einer verbesserten Klebkraft gegenüber den Klebharz-freien Vergleichsproben, wodurch die hohe Eignung der entsprechenden Systeme als Klebharze demonstriert wird. Aus den Experimenten ist jedoch auch ersichtlich, dass selbst bei den spezifischen Klebharzen der vorliegenden Erfindung der Massenanteil nicht zu stark gesteigert werden sollte, da bei einem zu großen Massenanteil die Beständigkeit gegen Ölsäure zu stark reduziert wird (vgl. Haftklebemasse V6).

Mit Blick auf die Zusammensetzung der Klebharze zeigt insbesondere der Vergleich mit den Haftklebemassen V7 und V8, dass der Gehalt an zweiten Monomeren mit 70 % knapp zu hoch liegt und dass die Beständigkeit gegen Ölsäure in diesen Haftklebemassen für eine positive Gesamtbewertung zu negativ beeinflusst wird, selbst wenn mit diesen Klebeharzen und den entsprechenden Haftklebemassen ausgezeichnete Beständigkeiten gegen Ethanol/Wasser erreicht werden können.

Festzustellen ist, dass sämtliche erfindungsgemäßen Haftklebemassen für beide Testchemikalien nach der Lagerung noch eine Klebkraft von mindestens 1,0 N/cm zeigen und somit in der Gesamtbewertung hinreichend beständig sind.

### 5. Rausdrück-Test:

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen Polycarbonat(PC)-Rahmen (Außenmaße 45 mm x 45 mm; Stegbreite 10 mm; Innenmaße (Fensterausschnitt) 25 mm x 25 mm; Dicke 3 mm) geklebt. Auf die andere Seite des doppelseitigen Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils Übereinanderlagen (Eck-auf-Eck) liegen. Die Verklebungsfläche betrug 248 mm². Die Verklebung wurde für 5 s mit 248 N gepresst und für 24 Stunden bei einer Temperatur von 23 °C und 50 % relativer Feuchte gelagert.

Die verklebten Prüfrahmen wurden anschließend für 24 h in einer abgedichteten Box in einem auf 60 °C temperierten Wasserbad gelagert, wobei jeweils eine Probe in eine der Testchemikalie getaucht und dann vollständig von dieser umgeben gelagert wurde wohingegen die jeweilige Kontrollprobe in Luft gelagert wurde.

Unmittelbar nach der vorstehend beschriebenen Lagerung wurde der Klebeverbund aus PC-Rahmen, Klebeband und PC-Fenster abgetrocknet und mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme einer Zwick Prüfmaschine zentrisch eingesetzt. Der Probenkopf mit einer Geschwindigkeit von 10 mm/s vertikal auf die Platte abgesenkt (Messbedingungen 23 °C, 50 % relative Feuchte). In Tabelle 5 ist die zum Herausdrücken des PC-Fensters benötigte Kraft in N angegeben. Die angegebenen Werte entsprechen dem Mittelwert aus fünf Messungen.

**Tabelle 5 - Rausdrück-Test Angaben in N**

| **HKM** | **Kontrolle Push Out** | **Ölsäure Push Out** | **Ethanol/Wasser Push Out** |
|---|---|---|---|
| V9 | 108 | 25 | 16 |
| E6 | 232 | 79 | 34 |
| E7 | 220 | 72 | 40 |
| E8 | 213 | 80 | 41 |
| V10 | 289 | 24 | 101 |
| E9 | 302 | 30 | 76 |
| E10 | 305 | 26 | 67 |
| V11 | 234 | 29 | 30 |
| E11 | 249 | 33 | 58 |
| E12 | 264 | 28 | 36 |

Die in Tabelle 5 zusammengestellten Messwerte bestätigen, dass sämtliche erfindungsgemäßen Haftklebemassen für beide Testchemikalien eine gute Beständigkeit aufweisen und zudem die Klebeigenschaften in den Kontrollproben spürbar verbessern. Hierbei ist festzustellen, dass die Restklebkraft der erfindungsgemäßen Proben nach der chemischen Belastung in vielen Fällen sogar besser ist, als die der Klebharz-freien Systeme. Insbesondere die Klebharze H4, H5 und H6 der Haftklebemassen E6 bis E9 weisen dabei besonders vorteilhafte Eigenschaften auf.

## Patentansprüche

1. Haftklebemasse, umfassend:
a) ein oder mehrere Poly(meth)acrylate mit einem gewichtsmittleren Molekulargewicht M_{w} von 200000 g/mol oder mehr in einem kombinierten Massenanteil von 50 % oder mehr, bezogen auf die Masse der Haftklebemasse, und
b) ein oder mehrere Klebharze mit einem gewichtsmittleren Molekulargewicht M_{w} von 20000 g/mol oder weniger, gemessen nach der Methode der Beschreibung, in einem kombinierten Massenanteil im Bereich von 1 bis 25 %, bezogen auf die Masse der Haftklebemasse,
wobei das eine oder die mehreren Klebharze herstellbar sind durch Polymerisation einer ersten Monomerzusammensetzung umfassend bezogen auf die Masse der ersten Monomerzusammensetzung:
i) ein oder mehrere erste Monomere, die ausgewählt sind aus der Gruppe bestehend aus aromatischen (Meth)acrylaten und Styrol, in einem kombinierten Massenanteil im Bereich von 5 bis 40 %,
ii) ein oder mehrere zweite Monomere, die ausgewählt sind aus der Gruppe bestehend aus Methylmethacrylat und Ethylmethacrylat, in einem kombinierten Massenanteil im Bereich von 35 bis 68 %, und
iii) ein oder mehrere dritte Monomere, die ausgewählt sind aus der Gruppe bestehend aus (Meth)acrylaten mit einem cycloaliphatischen Rest, in einem kombinierten Massenanteil im Bereich von 5 bis 40 %.

2. Haftklebemasse nach Anspruch 1, wobei der kombinierte Massenanteil des einen oder der mehreren Poly(meth)acrylate 75 % oder mehr, bevorzugt 77,5 % oder mehr, besonders bevorzugt 80 % oder mehr, beträgt, bezogen auf die Masse der Haftklebemasse.

3. Haftklebemasse nach einem der Ansprüche 1 oder 2, wobei der kombinierte Massenanteil des einen oder der mehreren Klebharze im Bereich von 5 bis 25 %, bevorzugt im Bereich von 7,5 bis 22,5 %, besonders bevorzugt im Bereich von 10 bis 20 %, liegt, bezogen auf die Masse der Haftklebemasse.

4. Haftklebemasse nach einem der Ansprüche 1 bis 3, wobei der kombinierte Massenanteil des einen oder der mehreren Poly(meth)acrylate und des einen oder der mehreren Klebharze 95 % oder mehr, bevorzugt 98 % oder mehr, besonders bevorzugt 99 % oder mehr, beträgt, bezogen auf die Masse der Haftklebemasse.

5. Haftklebemasse nach einem der Ansprüche 1 bis 4, wobei das eine oder die mehreren Poly(meth)acrylate herstellbar sind durch Polymerisation einer zweiten Monomerzusammensetzung umfassend bezogen auf die Masse der zweiten Monomerzusammensetzung:
iv) ein oder mehrere vierte Monomere die ausgewählt sind aus der Gruppe bestehend aus Acrylsäureestern gemäß der Formel (I),
CH₂=CH-C(O)OR¹ (I),
wobei R¹ für eine lineare oder verzweigte Alkylgruppe mit 1 bis 10 C-atomen steht, bevorzugt Methylacrylat, Ethylacrylat, n-Butylacrylat und Ethylhexylacrylat, in einem kombinierten Massenanteil im Bereich von 30 bis 80 %, bevorzugt im Bereich von 40 bis 70 %,
v) ein oder mehrere fünfte Monomere die ausgewählt sind aus der Gruppe bestehend aus Acrylsäureestern gemäß der Formel (II),
CH₂=CH-C(O)OR² (II),
wobei R² für einen Phenoxyalkylrest oder einen Alkoxyalkylrest mit 2 bis 5 C-Atomen steht, bevorzugt Phenoxyethylacrylat und Methoxyethylacrylat, in einem kombinierten Massenanteil im Bereich von 20 bis 70 %, bevorzugt im Bereich von 30 bis 50 %, und
vi) ein oder mehrere sechste Monomere die ausgewählt sind aus der Gruppe bestehend aus Acrylatmonomeren gemäß der Formel (III),
CH₂=CH-C(O)OR³ (III),
wobei R³ für ein H-Atom oder einen Hydroxyalkylrest mit 1 bis 4 C-Atomen steht, bevorzugt Acrylsäure, in einem kombinierten Massenanteil im Bereich von 0,5 bis 10 %, bevorzugt im Bereich von 1 bis 5 %.

6. Haftklebemasse nach einem der Ansprüche 1 bis 5, wobei der kombinierte Massenanteil der ersten Monomere, zweiten Monomere und dritten Monomere in der ersten Monomerzusammensetzung, bezogen auf die Masse der ersten Monomerzusammensetzung, 80 % oder mehr, bevorzugt 90 % oder mehr, beträgt.

7. Haftklebemasse nach einem der Ansprüche 1 bis 6, wobei die erste Monomerzusammensetzung bezogen auf die Masse der ersten Monomerzusammensetzung:
i1) das eine oder die mehreren ersten Monomere, in einem kombinierten Massenanteil im Bereich von 7,5 bis 35 %, bevorzugt im Bereich von 10 bis 30 %, umfasst, und/oder
ii1) das eine oder die mehreren zweiten Monomere, in einem kombinierten Massenanteil im Bereich von 40 bis 65 %, bevorzugt im Bereich von 45 bis 60 %, umfasst, und/oder
iii1) das eine oder die mehreren dritten Monomere, in einem kombinierten Massenanteil im Bereich von 7,5 bis 35 %, bevorzugt im Bereich von 10 bis 30 %, umfasst.

8. Haftklebemasse nach einem der Ansprüche 1 bis 7, wobei in der ersten Monomerzusammensetzung:
i2) das eine oder die mehreren ersten Monomere ausgewählt sind aus der Gruppe bestehend aus aromatischen (Meth)acrylaten, bevorzugt aromatischen Methacrylaten, besonders bevorzugt Benzylmethacrylat und Phenoxyethylmethacrylat, ganz besonders bevorzugt Benzylmethacrylat, und/oder
ii2) das eine oder die mehreren zweiten Monomere ausgewählt sind aus der Gruppe bestehend aus Methylmethacrylat und Ethylmethacrylat, bevorzugt Methylmethacrylat, und/oder
iii2) das eine oder die mehreren dritten Monomere ausgewählt sind aus der Gruppe bestehend aus Methacrylaten mit einem cycloaliphatischen Rest, bevorzugt Cyclohexylmethacrylat, Isobornylmethacrylat, Dicyclopentanylmethacrylat und Nornbornylmethacrylat, bevorzugt Cyclohexylmethacrylat.

9. Haftklebeband, umfassend eine Trägerschicht und als Haftklebemasse eine Haftklebemasse nach einem der Ansprüche 1 bis 8.

10. Verwendung eines oder mehrerer Klebharze zur Steigerung der Klebkraft in Poly(meth)acrylat-basierten Klebemassen und zur Steigerung der chemischen Beständigkeit, wobei das eine oder die mehreren Klebharze herstellbar sind durch Polymerisation einer ersten Monomerzusammensetzung umfassend bezogen auf die Masse der ersten Monomerzusammensetzung:
i) ein oder mehrere erste Monomere, die ausgewählt sind aus der Gruppe bestehend aus aromatischen (Meth)acrylaten und Styrol, in einem kombinierten Massenanteil im Bereich von 5 bis 40 %,
ii) ein oder mehrere zweite Monomere, die ausgewählt sind aus der Gruppe bestehend aus Methylmethacrylat und Ethylmethacrylat, in einem kombinierten Massenanteil im Bereich von 35 bis 68 %, und
iii) ein oder mehrere dritte Monomere, die ausgewählt sind aus der Gruppe bestehend aus (Meth)acrylaten mit einem cycloaliphatischen Rest, in einem kombinierten Massenanteil im Bereich von 5 bis 40 %.

## Claims

1. A pressure-sensitive adhesive, comprising:
a) one or more poly(meth)acrylates having a weight-average molecular weight M_{w} of 200,000 g/mol or more in a combined mass fraction of 50% or more, based on the mass of the pressure-sensitive adhesive, and
b) one or more tackifier resins having a weight-average molecular weight M_{w} of 20,000 g/mol or less, measured by the method as per the description, in a combined mass fraction in the range of 1 to 25%, based on the mass of the pressure-sensitive adhesive,
wherein the one or more tackifier resins are producible by polymerisation of a first monomer composition comprising, based on the mass of the first monomer composition:
i) one or more first monomers selected from the group consisting of aromatic (meth)acrylates and styrene, in a combined mass fraction in the range of 5 to 40%,
ii) one or more second monomers selected from the group consisting of methyl methacrylate and ethyl methacrylate, in a combined mass fraction in the range of 35 to 68%, and
iii) one or more third monomers selected from the group consisting of (meth)acrylates having a cycloaliphatic radical, in a combined mass fraction in the range of 5 to 40%.

2. The pressure-sensitive adhesive according to claim 1, wherein the combined mass fraction of the one or more poly(meth)acrylates is 75% or more, preferably 77.5% or more, particularly preferably 80% or more, based on the mass of the pressure-sensitive adhesive.

3. The pressure-sensitive adhesive according to any one of claims 1 or 2, wherein the combined mass fraction of the one or more tackifier resins is in the range of 5 to 25%, preferably in the range of 7.5 to 22.5%, more preferably in the range of 10 to 20%, based on the mass of the pressure-sensitive adhesive.

4. The pressure-sensitive adhesive according to any one of claims 1 to 3, wherein the combined mass fraction of the one or more poly(meth)acrylates and the one or more tackifier resins is 95% or more, preferably 98% or more, particularly preferably 99% or more, based on the mass of the pressure-sensitive adhesive.

5. The pressure-sensitive adhesive according to any one of claims 1 to 4, wherein the one or more poly(meth)acrylates are producible by polymerisation of a second monomer composition comprising, based on the mass of the second monomer composition:
iv) one or more fourth monomers selected from the group consisting of acrylic esters of the formula (I),
CH₂=CH-C(O)OR¹ (I),
wherein R¹ is a linear or branched alkyl group having 1 to 10 C atoms, preferably methyl acrylate, ethyl acrylate, n-butyl acrylate and ethylhexyl acrylate, in a combined mass fraction in the range of 30 to 80%, preferably in the range of 40 to 70%;
v) one or more fifth monomers selected from the group consisting of acrylic esters of the formula (II),
CH₂=CH-C(O)OR² (II),
wherein R² is a phenoxyalkyl radical or an alkoxyalkyl radical having 2 to 5 C atoms, preferably phenoxyethyl acrylate and methoxyethyl acrylate, in a combined mass fraction in the range of 20 to 70%, preferably in the range of 30 to 50%, and
vi) one or more sixth monomers selected from the group consisting of acrylate monomers of the formula (III),
CH₂=CH-C(O)OR³ (III),
wherein R³ is an H atom or a hydroxyalkyl radical having 1 to 4 C atoms, preferably acrylic acid, in a combined mass fraction in the range of 0.5 to 10%, preferably in the range of 1 to 5%.

6. The pressure-sensitive adhesive according to any one of claims 1 to 5, wherein the combined mass fraction of the first monomers, second monomers and third monomers in the first monomer composition, based on the mass of the first monomer composition, is 80% or more, preferably 90% or more.

7. The pressure-sensitive adhesive according to any one of claims 1 to 6, wherein the first monomer composition, based on the mass of the first monomer composition:
i1) comprises the one or more first monomers in a combined mass fraction in the range of 7.5 to 35%, preferably in the range of 10 to 30%, and/or
ii1) comprises the one or more second monomers in a combined mass fraction in the range of 40 to 65%, preferably in the range of 45 to 60%, and/or
iii1) comprises the one or more third monomers in a combined mass fraction in the range of 7.5 to 35%, preferably in the range of 10 to 30%.

8. The pressure-sensitive adhesive according to any one of claims 1 to 7, wherein in the first monomer composition:
i2) the one or more first monomers are selected from the group consisting of aromatic (meth)acrylates, preferably aromatic methacrylates, more preferably benzyl methacrylate and phenoxyethyl methacrylate, very preferably benzyl methacrylate, and/or
ii2) the one or more second monomers are selected from the group consisting of methyl methacrylate and ethyl methacrylate, preferably methyl methacrylate, and/or
iii2) the one or more third monomers are selected from the group consisting of methacrylates having a cycloaliphatic radical, preferably cyclohexyl methacrylate, isobornyl methacrylate, dicyclopentanyl methacrylate and norbornyl methacrylate, preferably cyclohexyl methacrylate.

9. The pressure-sensitive adhesive tape comprising a carrier layer and, as a pressure-sensitive adhesive, a pressure-sensitive adhesive according to any one of claims 1 to 8.

10. Use of one or more tackifier resins to increase the peel adhesion strength in poly(meth)acrylate-based adhesives and to increase the chemical resistance, wherein the one or more tackifier resins are producible by polymerisation of a first monomer composition comprising, based on the mass of the first monomer composition:
i) one or more first monomers selected from the group consisting of aromatic (meth)acrylates and styrene, in a combined mass fraction in the range of 5 to 40%,
ii) one or more second monomers selected from the group consisting of methyl methacrylate and ethyl methacrylate, in a combined mass fraction in the range of 35 to 68%, and
iii) one or more third monomers selected from the group consisting of (meth)acrylates having a cycloaliphatic radical, in a combined mass fraction in the range of 5 to 40%.

## Revendications

1. Masse d'adhésif sensible à la pression, comprenant :
a) un ou plusieurs poly(méth)acrylates dont la masse moléculaire moyenne en poids M_{w} est supérieure ou égale à 200 000 g/mol et dont la proportion massique globale est supérieure ou égale à 50 %, par rapport à la masse de ladite masse d'adhésif sensible à la pression, et
b) une ou plusieurs résines collantes dont la masse moléculaire moyenne en poids M_{w} est inférieure ou égale à 20 000 g/mol, mesurée selon la méthode indiquée dans la description, et dont la proportion massique globale est comprise entre 1 et 25 %, par rapport à la masse de ladite masse d'adhésif sensible à la pression,
ladite ou lesdites plusieurs résines collantes pouvant être préparées par polymérisation d'une première composition de monomères laquelle comprend, par rapport à ladite première composition de monomères :
i) un ou plusieurs premiers monomères choisis dans le groupe constitué de (méth)acrylates aromatiques et de styrène, dans une proportion massique globale comprise entre 5 et 40 %,
ii) un ou plusieurs deuxièmes monomères choisis dans le groupe constitué de méthacrylate de méthyle et de méthacrylate d'éthyle, dans une proportion massique globale comprise entre 35 et 68 %, et
iii) un ou plusieurs troisièmes monomères choisis dans le groupe constitué de (méth)acrylates pourvus d'un radical cycloaliphatique, dans une proportion massique globale comprise entre 5 et 40 %.

2. Masse d'adhésif sensible à la pression 1, la proportion massique globale dudit ou desdits plusieurs poly(méth)acrylates étant supérieure ou égale à 75 %, de préférence supérieure ou égale à 77,5 %, avec une préférence particulière supérieure ou égale à 80 %, par rapport à la masse de ladite masse d'adhésif sensible à la pression.

3. Masse d'adhésif sensible à la pression selon l'une des revendications 1 ou 2, la proportion massique globale de ladite ou desdites plusieurs résines collantes étant comprise entre 5 et 25 %, de préférence comprise entre 7,5 et 22,5 %, avec une préférence particulière comprise entre 10 et 20 %, par rapport à la masse de la masse d'adhésif sensible à la pression.

4. Masse d'adhésif sensible à la pression selon l'une des revendications 1 à 3, la proportion massique globale dudit ou desdits plusieurs poly(méth)acrylates et de ladite ou desdites plusieurs résines collantes étant supérieure ou égale à 95 %, de préférence supérieure ou égale à 98 %, avec une préférence particulière supérieure ou égale à 99 %, par rapport à la masse de ladite masse d'adhésif sensible à la pression.

5. Masse d'adhésif sensible à la pression selon l'une des revendications 1 à 4, ledit ou lesdits plusieurs poly(méth)acrylates pouvant être préparés par polymérisation d'une deuxième composition de monomères laquelle comprend, par rapport à la masse de la deuxième composition de monomères :
iv) un ou plusieurs quatrièmes monomères choisis dans le groupe constitué d'esters d'acide acrylique selon la formule (I),
CH₂=CH-C(O)OR¹ (I),
dans laquelle R¹ est un groupement alkyle linéaire ou ramifié renfermant 1 à 10 atomes de C, s'agissant préférentiellement d'acrylate de méthyle, d'acrylate d'éthyle, d'acrylate de n-butyle et d'acrylate d'éthylhexyle, dans une proportion massique globale comprise entre 30 et 80 %, de préférence comprise entre 40 et 70 %,
(v) un ou plusieurs cinquièmes monomères choisis dans le groupe constitué d'esters d'acide acrylique selon la formule (II),
CH₂=CH-C(O)OR² (II),
dans laquelle R² est un radical de phénoxyalkyle ou un radical d'alkoxyalkyle renfermant 2 à 5 atomes de C, s'agissant préférentiellement d'acrylate de phénoxyéthyle et d'acrylate de méthoxyéthyle, dans une proportion massique globale comprise entre 20 et 70 %, de préférence comprise entre 30 et 50 %, et
(vi) un ou plusieurs sixièmes monomères choisis dans le groupe constitué de monomères d'acrylate selon la formule (III),
CH₂=CH-C(O)OR³ (III),
dans laquelle R³ est atome de H ou un radical d'hydroxyalkyle renfermant 1 à 4 atomes de C, s'agissant préférentiellement d'acide acrylique, dans une proportion massique globale comprise entre 0,5 et 10 %, de préférence comprise entre 1 et 5 %.

6. Masse d'adhésif sensible à la pression selon l'une des revendications 1 à 5, la proportion massique globale des premiers monomères, des deuxièmes monomères et des troisièmes monomères dans la première composition de monomères étant supérieure ou égale à 80 %, de préférence supérieure ou égale à 90 %, par rapport à la masse de ladite première composition de monomères.

7. Masse d'adhésif sensible à la pression selon l'une des revendications 1 à 6, la première composition de monomères comprenant, par rapport à la masse de ladite première composition de monomères:
i1) ledit ou lesdits plusieurs premiers monomères dans une proportion massique globale comprise entre 7,5 et 35 %, de préférence comprise entre 10 et 30 %, et/ou
ii1) ledit ou lesdits plusieurs deuxièmes monomères dans une proportion massique globale comprise entre 40 et 65 %, de préférence comprise entre 45 et 60 %, et/ou
iii1) ledit ou lesdits plusieurs troisièmes monomères dans une proportion massique globale comprise entre 7,5 et 35 %, de préférence comprise entre 10 et 30 %.

8. Masse d'adhésif sensible à la pression selon l'une des revendications 1 à 7, dans la première composition de monomères
i2) ledit ou lesdits plusieurs premiers monomères étant choisis dans le groupe constitué de (méth)acrylates aromatiques, s'agissant préférentiellement de méthacrylates aromatiques, avec une préférence particulière de méthacrylate de benzyle et de méthacrylate de phénoxyéthyle, avec une préférence toute particulière de méthacrylate de benzyle, et/ou
ii2) ledit ou lesdits plusieurs deuxièmes monomères étant choisis dans le groupe constitué de méthacrylate de méthyle et de méthacrylate d'éthyle, s'agissant préférentiellement de méthacrylate de méthyle, et/ou
iii2) ledit ou lesdits plusieurs troisièmes monomères étant choisis dans le groupe constitué de méthacrylates pourvus d'un radical cycloaliphatique, s'agissant préférentiellement de méthacrylate de cyclohexyle, de méthacrylate d'isobornyle, de méthacrylate de dicyclopentanyle et de méthacrylate de norbornyle, le méthacrylate de cyclohexyle étant préféré.

9. Ruban adhésif sensible à la pression, comprenant une couche de support et, en tant que masse d'adhésif, une masse d'adhésif sensible à la pression selon l'une des revendications 1 à 8.

10. Utilisation d'un ou de plusieurs résines collantes pour augmenter la force de collage de masses d'adhésif à base de poly(méth)acrylates et pour augmenter la résistance aux produits chimiqies, ladite ou lesdites plusieurs résines collantes pouvant être préparée(s) par polymérisation d'une première composition de monomères laquelle comprend, par rapport à la masse de ladite première composition de monomères :
i) un ou plusieurs premiers monomères choisis dans le groupe constitué de (méth)acrylates aromatiques et de styrène, dans une proportion massique globale comprise entre 5 et 40 %,
ii) un ou plusieurs deuxièmes monomères choisis dans le groupe constitué de méthacrylate de méthyle et de méthacrylate d'éthyle, dans une proportion massique globale comprise entre 35 et 68 %, et
iii) un ou plusieurs troisièmes monomères choisis dans le groupe constitué de (méth)acrylates pourvus d'un radical cycloaliphatique, dans une proportion massique globale comprise entre 5 et 40 %.
